# EUROPÄISCHE PATENTSCHRIFT

(11) **EP 4 392 292 B1**
(45) Veröffentlichungstag und Bekanntmachung des Hinweises auf die Patenterteilung: **25.11.2026**
(21) Anmeldenummer: 22737559.9
(22) Anmeldetag: 15.06.2022
(51) Int. Cl.: B60R 16/02, H02G 3/16, H01H 85/20

(54) **VERTEILERKASTEN, INSBESONDERE FÜR FAHRZEUGE**
DISTRIBUTION BOX, IN PARTICULAR FOR VEHICLES
BOÎTE DE DISTRIBUTION, EN PARTICULIER POUR VÉHICULES

(30) Priorität: 26.08.2021 DE 202021104610 U
(43) Veröffentlichungstag der Anmeldung: 03.07.2024
(73) Patentinhaber: Tigerexped GmbH & Co. KG, 46519 Alpen (DE)
(72) Erfinder: HENNING, Martin, 46519 Alpen (DE)
(74) Vertreter: Freischem & Partner Patentanwälte mbB
(86) Internationale Anmeldenummer: PCT/EP2022/066430
(87) Internationale Veröffentlichungsnummer: WO 2023/025429

(56) Entgegenhaltungen:
- EP-A1- 2 756 996
- EP-A1- 3 243 705
- CH-A- 279 075
- DE-A1- 102009 036 599
- DE-B- 1 038 146
- DE-U1- 202010 003 456
- US-A1- 2006 164 797
- US-A1- 2007 270 045

## Beschreibung

Die Erfindung betrifft einen Verteilerkasten umfassend ein Gehäuse mit Kontaktvorrichtungen, wobei mehrere Sicherungen mit Schraubkontakten oder Steckkontakten in dem Gehäuse anbringbar und elektrisch leitend mit den Kontaktvorrichtungen verbindbar sind.

Derartige Verteilerkästen mit Sicherungen werden insbesondere in Fahrzeugen wie Wohnmobilen oder Motorbooten eingesetzt und dienen der Aufnahme von Sicherungen sowie dem Anschluss der Massekabel und der Pluskabel der Batterien und der elektrischen Verbraucher in dem Fahrzeug. Die Verteilerkästen werden häufig auch als Sicherungsverteiler oder Sicherungskasten bezeichnet. Über die Kontaktvorrichtungen, meist Kontaktbolzen oder Kontaktklemmen, werden die Kabel der Batterien und der Verbraucher an den Verteilerkasten angeschlossen und über die in dem Verteilerkasten angeordneten Sicherungen miteinander verbunden. Der Verteilerkasten kann weitere elektrische Bauelemente aufweisen, beispielsweise LEDs, d.h. Licht emittierende Dioden, welche beim Ausfall einer der Sicherungen aufleuchten.

Ein derartiger Verteilerkasten ist beispielsweise aus der Druckschrift EP 3 123 564 B1 bekannt. Er hat eine rechteckige Grundform und weist mehrere Kontaktbolzen auf, die mit elektrischen Leitern (Kabel) verbindbar sind. Die Kontaktbolzen sind entweder mit Kabeln über jeweils einen am Kabel angebrachten Kabelschuh verbunden oder mit einer Leiterplatte über eine Steckverbindung, wobei die Leiterplatte mehrere der Kontaktbolzen miteinander verbindet. Insgesamt weist der Verteilerkasten aus der Druckschrift EP 3 123 564 B1 Kontaktvorrichtungen für vier Sicherungen auf und dient somit dem Anschluss von vier elektrischen Geräten.

Die DE 20 2010 003 456 U1 beschreibt einen Stromverteiler für elektrische Anlagen, in dem mehrere elektrische Leiter an einen gemeinsamen Einwegsicherungsträger angeschlossen sind, wobei der Einwegsicherungsträger mehrere Sicherungen enthält. Die Enden der Kabel werden bevorzugt federnd mit den Sicherungsenden kontaktiert. Falls eine Sicherung ausfällt, muss der gesamte Einwegsicherungsträger ausgetauscht werden, um die Funktionsfähigkeit wiederherzustellen. Weitere Stromverteiler-Anordnungen gehen aus den Druckschriften DE 10 38 146 B, EP 2 756 996 A1, CH 279 075 A, US 2007/270045 A1, EP 3 243 705 A1, US 2006/164797 A1 und DE 10 2009 036599 A1 hervor.

Aufgabe der Erfindung ist es, den Anschluss einer großen Anzahl elektrischer Geräte bei kleiner Baugröße des Verteilerkastens zu ermöglichen. Ferner soll der Verteilerkasten kostengünstig sein und die erforderliche Materialmenge insbesondere an elektrischem Leitermaterial gering gehalten werden, wobei eine hohe Sicherheit angestrebt wird.

Diese Aufgabe wird durch die Merkmale des Anspruchs 1 gelöst.

Der umlaufende Rand des runden oder ovalen Gehäuses in Draufsicht ist rund, oval oder polygonal oder er besteht aus aneinander angrenzenden gerundeten Randabschnitten, wobei eine Mehrzahl von Kontaktvorrichtungen entlang des gebogenen Gehäuserands angeordnet ist. Die Kontaktvorrichtungen liegen auf einer Linie entlang des Gehäuserandes und sind zumindest in einem Teilbereich des Gehäuses äquidistant in einem Abstand zueinander angeordnet, der eine einfache und sichere Handhabung ermöglicht, insbesondere wenn Kabel über Kabelschuhe an den außen liegenden Kontaktvorrichtungen angeschlossen werden. Die an den Kontaktvorrichtungen angeschlossenen Kabel können sich von außerhalb des Verteilerkastens radial, d.h. rechtwinklig zu dem Rand hin erstrecken. Die Sicherungen erstrecken sich von den außenliegenden Kontaktvorrichtungen radial nach innen, d.h. rechtwinklig zum Rand zur Mitte des Gehäuses hin. Durch die im Wesentlichen sternförmige Anordnung der Sicherungen in dem Gehäuse können diese sehr platzsparend angebracht werden. Der zweite, zur Mitte des Gehäuses hin liegende Kontakt mehrerer Sicherungen kann mittels einer Leiterschiene zusammengefasst werden. Da die Kontakte der sternförmig zur Mitte des Gehäuses liegenden Sicherungen in der Mitte einander besonders nah liegen, ist die Zusammenfassung dieser Kontakte auf einem gemeinsamen Spannungspotential mit geringem Materialeinsatz und auf geringem Raum möglich. Die äußeren Kontaktvorrichtungen, mit denen die strahlenförmig angeordneten Sicherungen verbunden sind, haben dagegen einen größeren Abstand zueinander und ermöglichen eine sichere und leichte Befestigung von Kabelschuhen der Kabel, welche zu den Stromquellen oder Verbrauchern führen. Zumindest eine Gruppe mehrerer Sicherungen kann sternförmig angeordnet sein und an jeweils einer nahe dem Gehäuserand und nahe der Gehäusemitte liegenden Kontaktvorrichtung befestigt sein. Bei anderen Sicherungen, insbesondere Flachstecksicherungen ist der Raumbedarf nicht so kritisch. Hier können die Sicherungen mit einfachen Kontaktklemmen mit den Kabeln der Verbraucher verbunden werden. Aber auch für diese Sicherungen ist die radiale und somit strahlenförmige Anordnung im Gehäuse vorteilhaft, weil Stecksockel mit radialer Ausrichtung platzsparend im Gehäuse angeordnet werden können und über entsprechende Leiterbahnen mit Kontaktklemmen am Rand des Gehäuses verbunden werden können, wobei Plus- und Massekontakte immer abwechselnd liegen, so dass ein benachbartes Klemmenpaar dem Plus- und Masseanschluss eines Verbrauchers dient.

Bei kleinen Varianten kann es auch ausreichen, wenn das Gehäuse eine teilweise runde oder ovale Grundform aufweist und in Draufsicht einem Segment oder Abschnitt eines Kreises oder einer Ellipse entspricht. Auch hier kann dadurch, dass eine Mehrzahl von Kontaktvorrichtungen entlang des gebogenen Gehäuserands angeordnet ist, die vorteilhafte Wirkung der kompakten Anordnung der Kontaktvorrichtungen und der geordneten Zuleitung der Anschlusskabel in sternförmiger Anordnung zum Gehäuserand hin erzielt werden. Auch können die ersten Kontaktvorrichtungen nur über einen Teil der Länge des gebogenen Randes angeordnet sein. Bei den nachfolgend beschriebenen Ausführungsformen sind zum Beispiel Gruppen unterschiedlicher Kontaktvorrichtungen mit unterschiedlichen Abständen zueinander und auch mit unterschiedlichen Abständen zum Rand vorgesehen, wobei sich jede Gruppe nur über einen Teil des gebogenen Randes des Gehäuses erstreckt.

Der Verteilerkasten kann an einem zentralen Ort der elektrischen Anlage des Fahrzeugs angebracht sein, und alle daran angeschlossenen elektrischen Kabel laufen sternförmig auf das Gehäuse des Verteilerkastens zu. Auf diese Weise ist es möglich, bei kleiner Baugröße eine große Anzahl elektrischer Kabel an dem Verteilerkasten anzuordnen, wobei die Gefahr vermieden wird, dass die angeschlossenen Kabel einander kreuzen oder sich auf andere Weise stören.

Die Abstände zwischen den Kontaktvorrichtungen können regelmäßig sein, wobei unterschiedliche Gruppen von Kontaktvorrichtungen abhängig von den anzuschließenden Bauelementen, ihrer Lage oder ihrer Bauart unterschiedliche Abstände aufweisen können.

Anstatt der sehr kompakten kreisrunden Form kann das Gehäuse in Draufsicht auch eine polygonale Form mit kurzen geraden Randabschnitten aufweisen. In der Praxis kann die Länge jedes geraden Abschnittes des Gehäuserandes im Wesentlichen dem Abstand zwischen zwei benachbarten Kontaktvorrichtungen entsprechen, und je eine Kontaktvorrichtung kann in der Mitte eines jeden geraden Abschnittes angeordnet sein.

Je nach örtlichen Gegebenheiten kann auch die Gehäuseform von der runden Grundform abweichen und oval ausgebildet werden. Es ist auch möglich, ein längliches Gehäuse mit zwei halbkreisförmigen Randabschnitten vorzusehen, zwischen denen zwei gleichlange, gerade Abschnitte angeordnet sind. Auch in diesem Fall lassen sich im Bereich der halbkreisförmig gebogenen Randabschnitte umlaufend sehr platzsparend in regelmäßigen Abständen angeordnete Kontaktvorrichtungen anordnen, wobei radial nach innen verlagerte zweite Kontaktvorrichtungen vorgesehen sind, so dass zwischen je einer äußeren ersten und einer inneren zweiten Kontaktvorrichtung eine Sicherung anbringbar ist. Auch in den geraden Abschnitten zwischen den Rändern können die Kontaktvorrichtungen mit regelmäßigen Abständen zueinander angeordnet sein.

Die gerundete Gehäuseform hat mehrere Vorteile. Zum Beispiel können Kontaktvorrichtungen mit gleichem Potential, also einerseits Massekontakte und andererseits Pluskontakte, an plattenförmigen Sammelschienen im Innenbereich des Gehäuses befestigt werden, welche die Kontaktvorrichtungen elektrisch leitend miteinander verbinden. Die Verwendung von Sammelschienen für Kontakte eines Potentials ist in Verteilerkästen bekannt. Im vorliegenden Fall wird vorgeschlagen, flache plattenförmige Bauelemente aus elektrisch leitendem Material als Sammelschienen zu verwenden, die sich innerhalb des gewölbten Randes des Gehäuses erstrecken und eine geringe Dicke und Fläche und folglich eine geringe Masse aufweisen. Bei den aktuell hohen Kupferpreisen bedeutet eine Gewichtseinsparung gegenüber konventionellen geraden Sammelschienen eine erhebliche Kosteneinsparung. Der zentrale Bereich des Gehäuses kann zusätzlich für die Aufnahme von Ersatzteilen, z.B. Ersatzsicherungen verwendet werden, soweit hier keine Kontaktvorrichtungen angeordnet sind, an welche Kabel oder Sicherungen angeschlossen werden sollen.

Wie bereits erwähnt, kann der Gehäuserand mindestens eine der folgenden Eigenschaften aufweisen:
- der Gehäuserand ist in Draufsicht rund;
- der Gehäuserand ist in Draufsicht oval;
- der Gehäuserand ist in Draufsicht polygonal;
- der Gehäuserand weist einander gegenüberliegende gerade Abschnitte auf, in denen mehrere Kontaktvorrichtungen angeordnet sind.

Diese Optionen für den gekrümmten Randverlauf wurden schon weiter oben beschrieben. Bei einer ovalen Gehäusekontur ist die Länge größer als die Breite und sie ist in den Fällen vorzuziehen, wenn der für das Gehäuse verfügbare Bauraum in einer Richtung groß und in der dazu senkrechten Richtung klein ist. Das gleiche gilt für eine Gehäusekontur, die sich aus zwei Halbkreisen und einem dazwischen angeordneten Rechteck zusammensetzt, dessen Höhe dem Durchmesser der Halbkreise entspricht. Auch bei diesen Varianten ergibt sich durch die Krümmung erheblicher Bereiche des Gehäuserandes eine erhebliche Reduzierung der Fläche des Gehäuses dadurch, dass die Sicherungen in den gekrümmten Randbereichen von der Kontaktvorrichtung nahe dem Gehäuserand aus radial zur Mitte des Gehäuses ragen.

In der Praxis kann der Verteilerkasten weitere Bauelemente umfassen, zum Beispiel eine elektrische Leiterbrücke, welche mehrere Kontaktvorrichtungen miteinander verbindet. Es können auch LEDs im Gehäuse angeordnet werden. Je eine LED (lichtemittierende Diode) kann parallel zu jeder Sicherung geschaltet sein und aufleuchten, wenn die Sicherung ausfällt. Auf diese Weise wird dem Benutzer bequem angezeigt, dass eine Sicherung ersetzt werden muss oder ein angeschlossenes Gerät überprüft werden muss.

Wie erwähnt, kann in dem Gehäuse mindestens eine plattenförmige Sammelschiene angeordnet sein, deren äußerer Rand dem Gehäuserand folgt und die entlang ihres Randes in vorgegebenen Abständen mit Kontaktvorrichtungen elektrisch leitend verbunden ist. Die Sammelschiene erstreckt sich über einen Abschnitt der Grundkontur des Gehäuses in Draufsicht und weist eine geringe Dicke auf. Sie erfüllt die gleiche Funktion wie Sammelschienen in herkömmlichen Verteilerkästen, indem sie Kontaktvorrichtungen mit dem gleichen Spannungspotential miteinander verbindet. An der Sammelschiene kann eine erste Reihe von äquidistanten Kontaktvorrichtungen nahe dem äußeren Rand der plattenförmigen Sammelschiene aufweisen und eine zweite, innen liegende Reihe von äquidistanten Kontaktvorrichtungen einen zweiten Abstand zum äußeren Rand der Sammelschiene aufweisen, der größer als der erste Abstand ist. Die außen liegenden und die innen liegenden Kontaktvorrichtungen können in Umfangsrichtung des gekrümmten Gehäuserandes zueinander versetzt sein. Auf diese Weise lässt sich die Zahl der Anschlüsse an die Sammelschiene erhöhen.

Der durch die zusätzlichen Anschlüsse geringere Abstand zwischen den einzelnen Anschlüssen ist unproblematisch, weil alle an die Sammelschiene angeschlossenen Anschlüsse das gleiche Potential aufweisen.

In der Praxis kann der Verteilerkasten mindestens eines der folgenden aufweisen:
- eine erste Sammelschiene, die dazu eingerichtet ist, mit mindestens eines Massekabels mindestens einer Batterie verbunden zu werden;
- eine zweite Sammelschiene, die dazu eingerichtet ist, mit mindestens eines Massekabels mindestens eines Verbrauchers verbunden zu werden;
- eine elektrische Leiterbrücke, welche die erste Sammelschiene und die zweite Sammelschiene verbindet.

Die Auftrennung von Batteriemasse und Verbraucher-Massepotential ermöglicht es, über einen Shunt (niederohmiger elektrischer Messwiderstand) den gesamten zwischen Massepotential und Pluspotential fließenden Strom zu messen. Diese Messung ist für das Batteriemanagement hilfreich, insbesondere zur Bestimmung des Ladungszustandes der Batterie und zur Warnung vor einer Tiefentladung. Wenn eine derartige Messung nicht durchgeführt werden soll, kann eine Leiterbrücke an einer Kontaktvorrichtung der ersten Sammelschiene und an einer Kontaktvorrichtung der zweiten Sammelschiene angebracht werden, und beide Sammelschienen elektrisch leitend miteinander verbinden. Wenn die Messung dagegen erfolgen soll, wird die Batteriemasse von der Verbrauchermasse getrennt und die Verbindung über den Messshunt hergestellt, dessen beide Kontakte mit je einer Kontaktvorrichtung der ersten Sammelschiene und der zweiten Sammelschiene verbunden werden. In diesem Fall kann ein Isolationsstreifen zwischen zwei benachbarten Kontaktvorrichtungen befestigt werden, die einerseits mit der ersten und andererseits mit der zweiten Sammelschiene verbunden sind. Der Isolationsstreifen stellt sicher, dass nicht unerwünschte Kontaktierung zwischen den zwei Sammelschienen den Messshunt überbrückt. Der Isolationsstreifen wird selbstverständlich entfernt, wenn diese beiden benachbarten Kontaktvorrichtungen über die Leiterbrücke miteinander verbunden werden.

Je nach Bauart und Größe der Schmelzsicherungen können die Kontaktvorrichtungen unterschiedlich ausgebildet sein. Für kleinere Schmelzsicherungen, die als Flachstecksicherungen ausgebildet sind, können in dem Verteilerkasten Kontaktklemmen vorgesehen werden. Es sind für solche Flachstecksicherungen genormte Sockel oder Sicherungshalter verfügbar, in welche die Steckkontakte der Flachstecksicherungen einsteckbar sind.

Sogenannte Streifensicherungen oder Blattsicherungen weisen Schraubkontakte auf, d.h. flache Metallabschnitte, welche zum Hindurchstecken eines Kontaktbolzens oder einer Kontaktschraube bestimmt sind und mit einer Mutter oder mit der Kontaktschraube festgeklemmt werden. Durch die Schraubverbindung wird der jeweilige Metallabschnitt fest gegen eine Sammelschiene oder ein anderes flaches Kontaktelement gepresst, und es ergibt sich ein niedriger Kontaktwiderstand.

In der Praxis kann der Verteilerkasten ferner mindestens eine Leiterplatte oder Leiterlasche aufweisen, welche die in dem Gehäuse angeordneten Bauelemente elektrisch leitend miteinander verbindet. Leiterlaschen können verwendet werden, um die außen liegenden Pluskontakte größerer Sicherungen mit Kontaktbolzen oder Kontaktschrauben zu verbinden, an denen die Pluskabel zu den Batterien oder Verbrauchern angeschlossen werden. Leiterplatten, auch Platinen genannt, mit Leiterbahnen zur Verbindung einer Vielzahl von Bauelementen können verwendet werden, um kleinere Bauelemente, zum Beispiel Sicherungshalter oder Kontroll-LEDs anzuschließen.

In der Praxis kann das Gehäuse eine Grundplatte und einen abnehmbaren Deckel aufweisen. Bei vielen Anwendungsfällen sind die Sicherungen gasdicht anzuordnen. Aus diesem Grund kann das Gehäuse eine Dichtung zwischen Grundplatte und Deckel aufweisen. Die Dichtung kann den Bereich der Grundplatte, auf dem die Sicherungen anbringbar sind, gegenüber der Umgebung abdichten. Bei der Verwendung eines Verteilerkastens in einem Motorraum wird aus Sicherheitsgründen gefordert, dass der die Sicherungen aufnehmende Raum gasdicht gegenüber der Umgebung abgedichtet ist, um zu vermeiden, dass sich in dem Raum mit den Sicherungen ein brennbares Gemisch bildet.

Der Deckel kann einen Drehverschluss aufweisen, der mit einem Widerlager der Grundplatte verriegelbar ist und über einen Drehknauf betätigbar ist. Ein derartiger Drehknauf ist leicht mit einer Hand zu bedienen und ermöglicht eine schnelle Anbringung oder Entfernung des Deckels. Der Drehknauf kann einstückig mit dem Deckel verbunden sein, wenn der Deckel drehbar an dem Gehäuse befestigt ist. Der Deckel kann dann bei einer runden Gehäuseform an seinem Umfang federnde Rastvorrichtungen aufweisen, welche den Deckel an der Grundplatte festlegen. Ist der Deckel zur Befestigung in einer festgelegten Drehposition vorgesehen, kann der Drehknauf aber auch ein getrenntes Bauteil sein, dass ein Loch im Deckel durchragt und mit einem Widerlager, zum Beispiel nach Art eines Bajonett-Verschlusses, an der Grundplatte zusammenwirkt. In diesem Fall kann auch eine Dichtung zwischen Deckel und Drehknauf angeordnet sein, um den Aufnahmeraum für die Sicherungen gegenüber der Umgebung abzudichten.

Wie weiter oben erläutert, können in dem Gehäuse LEDs angeordnet sein, die bei dem Ausfall einer Sicherung aufleuchten. Damit diese LEDs auch von außen wahrnehmbar sind, kann der Deckel aus transparentem Material bestehen. Zusätzlich oder alternativ kann der Deckel mindestens einen Lichtleiter aufweisen, der sich in das Gehäuse erstreckt und dessen freies Ende nahe einer LED liegt. Der Lichtleiter kann von einem an das transparente Material des Deckels angespritzten Zapfen gebildet werden. Der Lichtleiter verursacht einen Leuchtpunkt auf der Oberseite des Deckels, wenn die ihm zugeordnete LED aufleuchtet. So kann bereits bei verschlossenem Deckel erkannt werden, welche Sicherung defekt ist. Die Außenseite des Deckels kann beschriftet sein und Angaben über den Bemessungsstrom der Sicherung und den verbundenen Verbraucher enthalten. Dann ist bei geschlossenem Deckel über den Leuchtpunkt auf dem Deckel klar erkennbar, welcher der Verbraucher stromlos ist und welche Sicherungsart verwendet werden muss, um die defekte Sicherung zu ersetzen.

Der Deckel kann ferner im Bereich des Gehäuserandes mindestens eine Abdeckzunge für eine Kontaktvorrichtung aufweisen. Die Abdeckzunge kann über eine Sollbruchstelle an dem Deckel befestigt sein. In der Praxis können alle Kontaktvorrichtungen im Bereich des Gehäuserandes durch derartige Abdeckzungen abgedeckt werden. Erst wenn ein Kabel mit einer Kontaktvorrichtung verbunden wird, muss die Abdeckzunge der betroffenen Kontaktvorrichtung entfernt werden. So können nicht verwendete Kontaktvorrichtungen gegen ungewolltes Kontaktieren geschützt werden.

Die Grundplatte kann zwischen zueinander benachbarten Kontaktvorrichtungen nahe dem Gehäuserand Rippen aus isolierendem Material aufweisen. Diese Rippen trennen an die Kontaktvorrichtungen angeschlossene Kabelschuhe physisch voneinander und vermeiden unerwünschte Kontaktbildungen.

Wie oben erläutert, kann die Grundplatte ferner eine Kopplungsvorrichtung aufweisen, an der ein Isolationsstreifen zwischen zwei Kontaktvorrichtungen befestigbar ist. Der Isolationsstreifen zwischen den zwei Kontaktvorrichtungen ist folglich entfernbar, wenn die zwei Kontaktvorrichtungen mittels der oben angesprochenen Leiterbrücke miteinander verbunden werden sollen. Wenn alternativ die Leiterbrücke entfernt wird, kann der Isolationsstreifen an der Grundplatte angeordnet werden, um die zwei Kontaktvorrichtungen gegeneinander zu isolieren. Die Kopplungsvorrichtung kann eine einfache Bohrung in der Grundplatte sein, in die ein Zapfen einsteckbar ist, der an einem flachen Kunststoffstreifen angeordnet ist.

Die Grundplatte kann schließlich aus Kunststoff hergestellt sein, in den mindestens eine Sammelschiene, Leiterlasche oder Kontaktvorrichtung eingebettet ist. In der Praxis werden die Grundplatte und die weiteren Kunststoffelemente des Verteilerkastens (Deckel, Drehknauf, Abdeckplatte) im Spritzgießverfahren aus Kunststoff gefertigt. Die elektrisch leitenden Elemente wie Sammelschiene, Leiterlasche oder Kontaktvorrichtung können in die Spritzgießform eingelegt werden und mit Kunststoff umgossen werden. Dadurch werden diese Elemente räumlich unveränderbar an den Kunststoffteilen festgelegt. Insbesondere können Sammelschiene, Leiterlasche oder Kontaktvorrichtung Gewindebohrungen aufweisen, in die Schrauben zur Bildung der Kontaktbolzen eingeschraubt sind, und gemeinsam mit diesen Schrauben in die Spritzgießform eingelegt werden. Durch das Umgießen mit Kunststoff werden die Schrauben drehfest an den elektrisch leitenden Elementen befestigt.

Der Verteilerkasten kann ferner mindestens eine elektrisch isolierende Abdeckplatte aufweisen. Auf der Vorderseite der Grundplatte des Gehäuses, auf der die Sicherungen angebracht sind und die vom Deckel abgedeckt ist, kann eine isolierende Abdeckplatte verschiedene Kontaktvorrichtungen gegeneinander isolieren. Auf der Rückseite der Grundplatte kann eine Leiterplatte angeordnet sein, die durch eine isolierende Abdeckplatte abgedeckt wird.

Weitere praktische Ausführungsformen und Vorteile der Erfindung sind nachfolgend im Zusammenhang mit den Zeichnungen beschrieben.
Fig. 1 zeigt eine Draufsicht auf die Grundplatte einer ersten Ausführungsform des hier beschriebenen Verteilerkastens mit darauf angebrachten Bauelementen ohne Deckel.
Fig. 2 zeigt eine perspektivische Seitenansicht des Verteilerkastens mit Deckel und Drehknauf zum Verschließen des Deckels.
Fig. 3 zeigt eine perspektivische Ansicht der Innenseite des Deckels.
Fig. 4 zeigt eine dreidimensionale Ansicht des Verteilerkastens aus Fig. 1, ohne Deckel.
Fig. 5 zeigt eine Explosionsansicht der Bauelemente des Verteilerkastens.
Fig. 6 zeigt die beispielhafte Darstellung eines Schaltbilds der verschiedenen Kontaktvorrichtungen des Verteilerkastens aus den vorangehenden Figuren.
Fig. 7 zeigt vier mögliche alternative Konturen des Gehäuses des hier beschriebenen Verteilerkastens in Draufsicht.
Fig. 8 zeigt eine Draufsicht auf die Grundplatte einer zweiten kompakten Ausführungsform des hier beschriebenen Verteilerkastens mit darauf angebrachten Bauelementen ohne Deckel.
Fig. 9 zeigt eine Draufsicht auf den Deckel des Verteilerkastens aus Fig. 8.
Fig. 10 zeigt die beispielhafte Darstellung des Schaltbilds der Kontaktvorrichtungen des Verteilerkastens aus den Fig, 8 und 9.

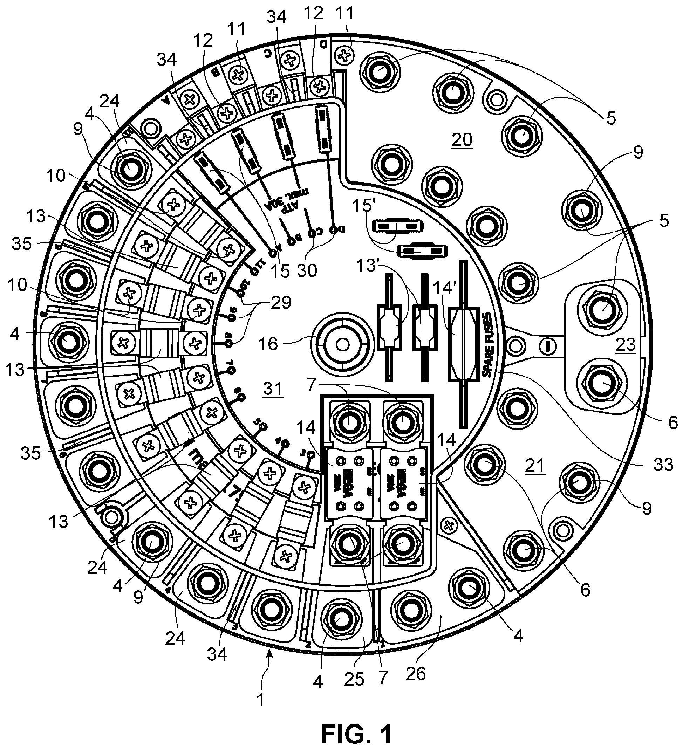

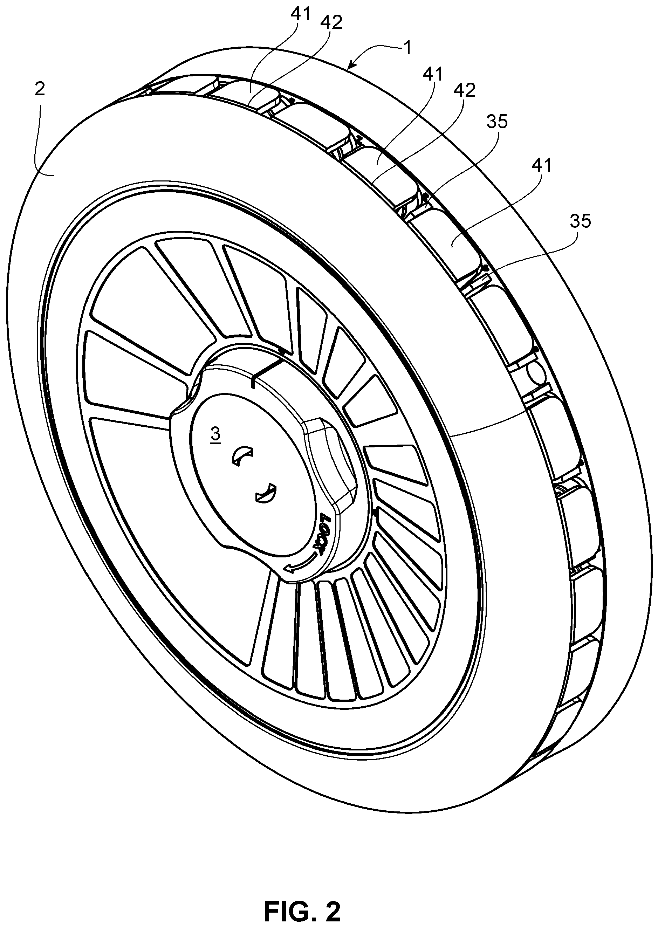

Die Fig. 1 zeigt eine Draufsicht auf die Grundplatte 1 des Gehäuses des Verteilerkastens mit darauf angebrachten Bauelementen. Der in Fig. 2 dargestellte Deckel 2 sowie der Drehknauf 3 zur Befestigung des Deckels 2 ist in Fig. 1 nicht dargestellt. Der hier beschriebene Verteilerkasten bildet den zentralen Sicherungsverteiler eines Gleichstromkreises zum Beispiel eines Bootes oder eines Wohnmobils.

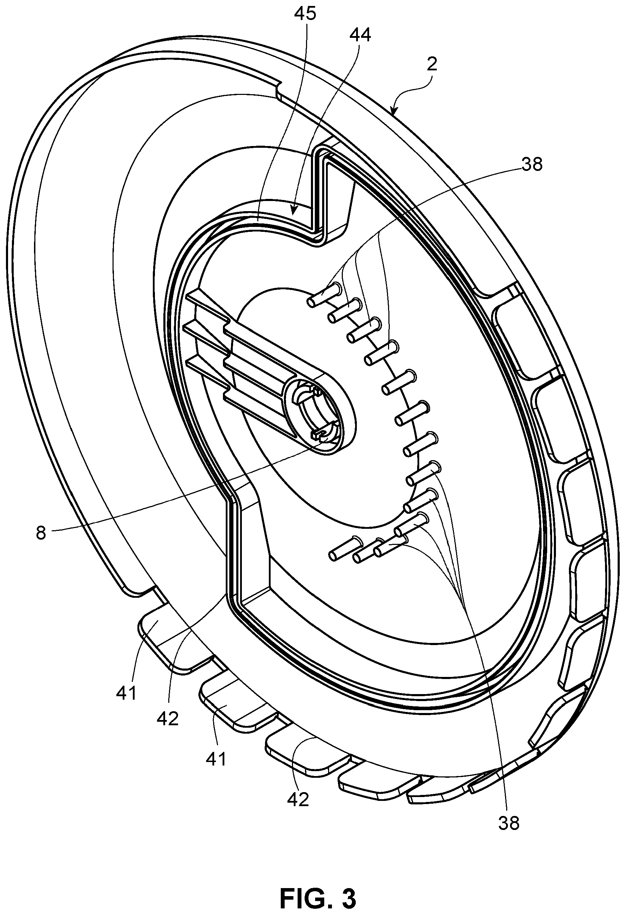

In der Mitte weist die Grundplatte 1 ein Widerlager 16 für ein zentrales Verriegelungselement 8 (Fig. 3) des Drehknaufs 3 auf. Das Widerlager 16 ist nach Art eines Bajonettverschlusses ausgebildet. Durch das Einstecken des Verriegelungselements 8 des Drehknaufs 3 und durch Drehen wird das Verriegelungselement 8 in dem Widerlager 16 in der Grundplatte 1 arretiert und hält den Deckel 2 fest an der Grundplatte 1. Auf der Grundplatte 1 sind Streifensicherungen 13 für mittlere Bemessungsströme und Streifensicherungen 14 für hohe Bemessungsströme angeordnet, sowie vier Flachstecksicherungen 15, welche für niedrige Bemessungsströme ausgelegt sind. Ferner sind im mittleren Bereich der Grundplatte 1 Halterungen für Ersatzsicherungen 13', 14', 15' der verschiedenen Bauarten vorgesehen, die im Falle eines Sicherungsausfalls eine der mit den elektrischen Geräten verbundenen Sicherungen 13, 14, 15 ersetzen können.

Die Grundplatte 1 des Gehäuses sowie der Deckel 2 haben in Draufsicht eine kreisrunde Kontur. Auf der Grundplatte 1 sind in Abständen zueinander verschiedene Kontaktvorrichtungen angebracht. Zum einen sind Kontaktbolzen 4, 5, 6, 7 zu erkennen, welche ein Gewinde zum Aufschrauben jeweils einer Mutter 9 aufweisen. Wie weiter unten beschrieben, dienen die Kontaktbolzen 4 - 7 der Befestigung unterschiedlicher Schraubkontakte. Ferner sind Kontaktschrauben 10 zu erkennen, welche ebenfalls der Befestigung von Schraubkontakten dienen. Schließlich sind Kontaktklemmen 11 und 12 dargestellt, welche Klemmschrauben zum Festklemmen je eines elektrischen Leiters aufweisen. Aus Gründen der Übersichtlichkeit sind nicht in jedem Fall alle funktionsgleichen Elemente mit Bezugszeichen versehen.

In Fig. 1 ist auf der linken Seite eine Mehrzahl von Streifensicherungen 13 zu erkennen, deren Schraubkontakte mit zwei Kontaktschrauben 10 befestigt sind. Die Streifensicherungen 13 dienen beispielsweise dem Anschluss von elektrischen Verbrauchern und können beispielsweise einen Bemessungsstrom zwischen 100 und 200 Ampere aufweisen. Es wird darauf hingewiesen, dass Streifensicherungen mit verschiedenen Bemessungsströmen hergestellt werden, die üblicherweise zwischen 30 und 425 Ampere liegen.

Die nahe der Gehäusemitte liegenden Schraubkontakte der Streifensicherungen 13 sind mit dem Pluspotential der Batterie oder Batterien verbunden. Die außenliegenden Kontakte der Streifensicherungen 13 sind mit Kontaktvorrichtungen verbunden, die den Anschluss eines Pluskabels eines Verbrauchers oder einer Batterie ermöglichen.

In Fig. 1 sind ebenfalls zwei größere Streifensicherungen 14 zu erkennen, die einen Bemessungsstrom von etwa 400 Ampere aufweisen. Diese Streifensicherungen 14 können beispielsweise mit einem Solarmodul zum Laden der Batterie verbunden sein.

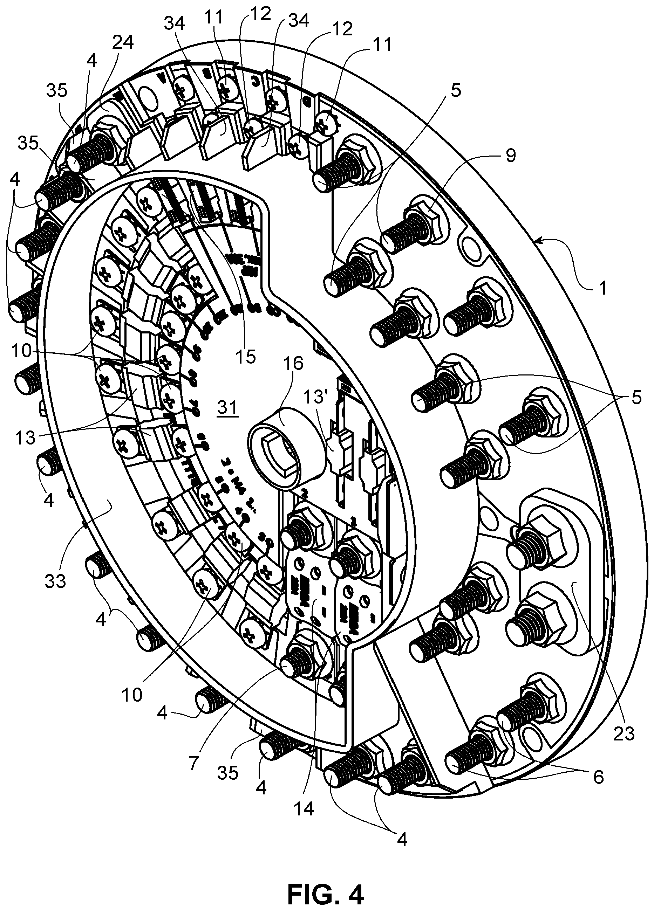

Schließlich sind im oberen Bereich der Grundplatte 1 in Fig. 1 links von der Mitte vier Flachstecksicherungen 15 zu erkennen, die zum Anschluss kleinerer Verbraucher dienen. Zu diesem Zweck sind Kontaktklemmen 11, 12 im Randbereich der Grundplatte 1 vorgesehen, welche einerseits mit dem Massepotential und andererseits mit den Flachstecksicherungen 15 elektrisch leitend verbunden sind. Die äußeren Kontaktklemmen 11 in unmittelbarer Nähe des Randes der Grundplatte 1 sind mit dem Massepotential verbunden. Die inneren Kontaktklemmen 12, die entlang einer Kreislinie innerhalb der äußeren Kontaktklemmen 11 angeordnet und zu diesen in Umfangsrichtung versetzt sind, bilden die Pluskontakte. Jeder Flachstecksicherung 15 ist ein benachbartes Paar Kontaktklemmen 11, 12 zugeordnet, so dass die zwei Litzen eines Anschlusskabels eines Verbrauchers gemeinsam zu diesen benachbarten Kontaktklemmen 11, 12 geführt werden können. Die innenliegenden Kontaktklemmen 12 führen über die Flachstecksicherungen 15 zum Pluspotential. Die außenliegenden Kontaktklemmen liegen auf Massepotential. Jede innenliegende Kontaktklemme 12 ist durch seitliche Rippen 34 aus isolierendem Material gegenüber den benachbarten Kontaktklemmen 12 isoliert. In Fig. 4 ist zu erkennen, dass diese Rippen 34 Bestandteile der aus Kunststoffmaterial hergestellten Grundplatte 1 sind.

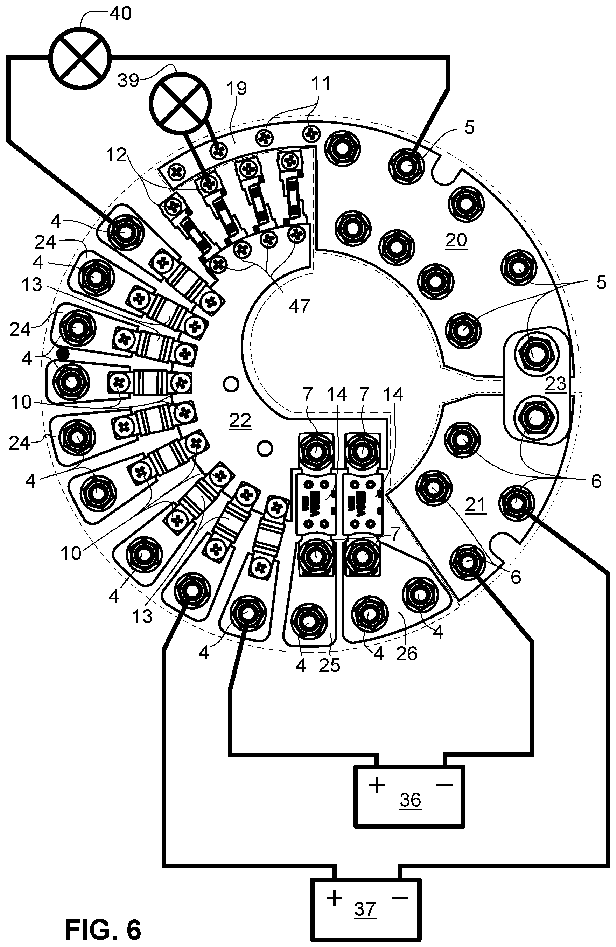

Die auf der Grundplatte 1 angeordneten Kontaktbolzen 4 - 7 lassen sich gemäß dem angeschlossenen Spannungspotential und den angeschlossenen Geräten aufteilen. Zur Erläuterung dieser Zuordnung zeigt die Fig. 6 ein elektrisches Schaltbild, in dem die wesentlichen elektrischen Bauteile des Sicherungsverteilers mit daran angebrachten Sicherungen zu erkennen sind. In dem Sicherungsverteiler werden Kontaktvorrichtungen mit gleichem Potential zusammengefasst, indem sie elektrisch leitend mit Sammelschienen verbunden werden. Aus herkömmlichen Sicherungsverteilern sind gerade Sammelschienen bekannt, an denen die Sicherungen nebeneinander angeschlossen sind. Zur Erhöhung der Anschlussdichte und Verringerung der Gehäusegröße werden bei dem hier beschriebenen Verteilerkasten flache, plattenförmige Sammelschienen aus Metall, in der Regel Kupfer, vorgesehen, an denen die Kontaktvorrichtungen angeschlossen sind.

Eine erste Sammelschiene 20 fasst die Kontaktvorrichtungen zum Anschluss der Massekabel der Verbraucher zusammen. Diese Sammelschiene 20 ist in Fig. 6 oben rechts dargestellt. Die Kontaktvorrichtungen für den Anschluss leistungsfähiger Verbraucher werden von Kontaktbolzen 5 gebildet, an denen die Kabelschuhe (nicht dargestellt) an den Enden der Massekabel der Verbraucher mit Muttern 9 festgeschraubt werden können. Die Sammelschiene 20 weist am linken Rand einen schmalen Streifen 19 auf, der entlang eines Abschnitts eines Rings und entlang des Randes der Grundplatte 1 verläuft. Dieser Streifen 19 dient dem Anschluss der zu den Flachstecksicherungen 15 führenden Masseleiter mittels der außenliegenden Kontaktklemmen 11.

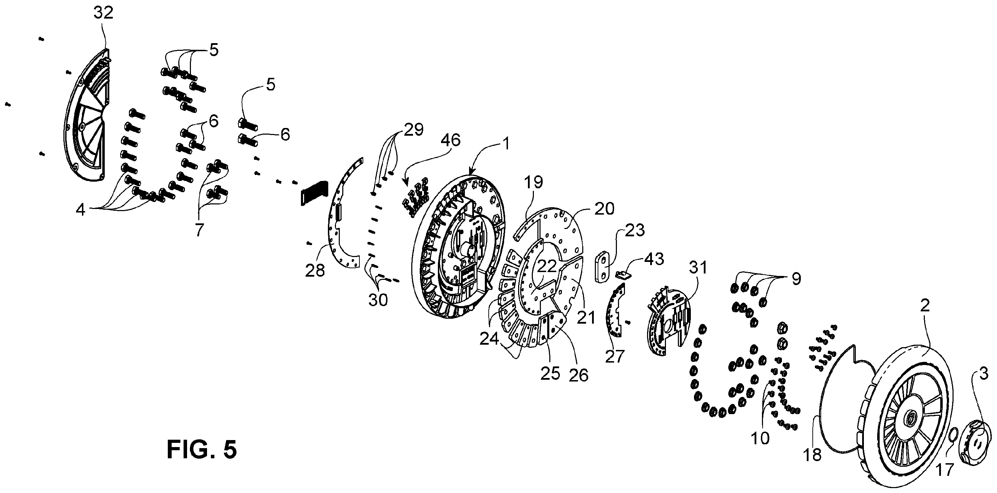

Am rechten Rand der Grundplatte 1 unterhalb der Sammelschiene 20 ist eine Sammelschiene 21 für den Anschluss der Massekabel von Batterien 36, 37 (Fig. 6) angeordnet. Zu diesem Zweck sind Kontaktbolzen 6 an dieser Sammelschiene 21 vorgesehen, die baugleich zu den Kontaktbolzen 5 für die Verbrauchermassekabel ausgestaltet sein können. In der in Fig. 6 dargestellten Schaltanordnung ist an den benachbarten Kontaktbolzen 5 und 6 der Sammelschienen 20 und 21 eine Leiterbrücke 23 befestigt, welche von einem flachen Kupferelement mit zwei Durchgangslöchern gebildet wird. Die Leiterbrücke 23 stellt eine elektrische Verbindung zwischen den Sammelschienen 20 und 21 her. Wenn allerdings eine Strommessung des Entnahmestroms der Batterie erfolgen soll, kann die Leiterbrücke 23 zwischen der Sammelschiene 20 für den Masseanschluss der Verbraucher und der Sammelschiene 21 für den Masseanschluss der Batterien getrennt und der hier fließende Strom gemessen werden. In Fig. 5 ist ein Isolationsstreifen 43 mit einem zapfenförmigen Vorsprung zu erkennen, der bei entfernter Leiterbrücke in ein Loch in der Grundplatte 1 einsteckbar ist, so dass der Isolationsstreifen, die benachbarten Kontaktbolzen 5 und 6 voneinander trennt und isoliert, wenn keine Leiterbrücke 23 vorhanden ist.

Eine weitere Sammelschiene 22 erstreckt sich im Wesentlichen in der linken Gehäusehälfte in Fig. 6 und fasst das Pluspotential zusammen. An diese Sammelschiene 22 sind über die Sicherungen 13, 14, 15 die Plusleiter von Batterien und Verbraucher angeschlossen. Die Streifensicherungen 13 und 14 sind mit im Wesentlichen entlang des linken und unteren Gehäuserandes angeordneten Kontaktbolzen 4 elektrisch leitend verbunden.

Wie in Fig. 6 durch die dünnen Umrahmungslinien kenntlich gemacht, teilen sich die Kontaktvorrichtungen des Verteilerkastens in drei unterschiedliche Zonen auf, nämlich eine erste, mit langen Strichen gestrichelt umrandete große Zone für die Pluskontakte, in der die Sammelschiene 22 und die damit verbundenen Sicherungen 13, 14, 15 sowie die positiven Kontaktklemmen 12 und die Anschlussbolzen 4 liegen. Eine zweite Zone ist mit kurzen Strichen gestrichelt umrandet und dient dem Anschluss der Massekabel von Batterien an den Kontaktbolzen 6 im unteren rechten Viertel des Gehäuses in der Draufsicht der Fig. 6. Eine dritte, darüber liegende Zone ist strichpunktiert umrandet und weist die Kontaktbolzen 5 für die Massekabel der Verbraucher auf. Bei Bedarf kann - wie erwähnt - die in Fig. 6 gezeigte Leiterbrücke 23 die beiden Anschlusszonen für Massekabel miteinander verbinden.

Die einzelnen Elemente des Verteilerkastens (ohne Sicherungen) sind auch in der Explosionszeichnung der Fig. 5 zu erkennen. Es ist aber zu berücksichtigen, dass Fig. 5 keine Montagezeichnung darstellt. Einzelne der erkennbaren Bauelemente, insbesondere die Sammelschienen 20, 21, 22 und weitere plattenförmige Bauelemente können in das Spritzgießwerkzeug für die Grundplatte 1 eingelegt und hiermit untrennbar verbunden werden. In Fig. 5 ist zu erkennen, dass ein Dichtring 17 das runde Verriegelungselement 8 (Fig. 3) des Drehknaufs 3 umgibt und die Öffnung in dem Deckel 2, welche von dem Verriegelungselement 8 durchragt wird, abdichtet. Eine zweite Dichtung 18 dichtet den äußeren Rand des Aufnahmeraums für die Sicherungen 13, 14, 15 auf der Grundplatte gasdicht ab und wirkt mit entsprechenden Dichtflächen des Deckels 2 und der Grundplatte 1 zusammen. Insbesondere in Fig. 4 ist zu erkennen, dass die Grundplatte 1 eine aus der Ebene der Grundplatte 1 herausragende Dichtwandung 33 aufweist, die den Bereich mit den Sicherungen 13, 14, 15 auf der Grundplatte 1 eingrenzt. Auf dieser Dichtwandung 33 liegt die Dichtung 18 auf und ermöglicht es, den von der Grundplatte 1 und dem Deckel 2 mit dem Drehknauf 3 eingegrenzten Aufnahmeraum für die Sicherungen 13, 14, 15 gegenüber der Umgebung gasdicht abzudichten. In Fig. 3 ist zu erkennen, dass der Deckel eine komplementäre doppelwandige Dichtwandung 44 mit Aufnahmenut 45 aufweist, in die die Dichtung 18 (Fig. 5) eingelegt werden kann und in welche die Dichtwandung 33 der Grundplatte 1 hineinragt.

In Fig. 5 ist zu erkennen, dass die Kontaktbolzen 4-7 als Schrauben mit Sechskantköpfen ausgebildet sein können. Die Sechskantköpfe liegen auf der Rückseite der Grundplatte 1 und die Gewindebolzen der Schrauben durchragen die Sammelschienen oder Leiterlaschen, welche Durchgangslöcher aufweisen. Die Durchgangslöcher können Gewinde aufweisen, in die die Außengewinde der Schrauben eingeschraubt sind. Alternativ können die Kontaktbolzen durch Nieten oder Löten mit den entsprechenden Sammelschienen oder Leiterlaschen verbunden werden.

Die Sammelschienen 20, 21 und 22 sowie die Leiterlaschen 24, 25, 26 sind etwa in der Mitte der Fig. 5 dargestellt. Wie erwähnt, können diese elektrisch leitenden Elemente in das Material der Grundplatte eingebettet sein. Die jeweiligen Kontaktbolzen 4-7 werden von Schrauben gebildet, die in entsprechende Gewindebohrungen in den Sammelschienen 19, 21 oder Leiterlaschen 24, 25, 26 geschraubt sind, wobei der Kopf der schraubenförmigen Kontaktbolzen 4-7 gegen die Rückseite der jeweiligen Sammelschiene 19, 21 oder Leiterlasche 24, 25, 26 anliegt. Der vorspringende Streifen 19 der Sammelschiene 20 weist Gewindebohrungen auf, mit welchen die Schrauben zur Bildung der Klemmkontakte 11 verschraubt werden.

Die auf der Grundplatte 1 außen nahe dem Rand liegenden Kontakte der Streifensicherungen 13 für mittlere Stromstärken werden mit Leiterlaschen 24 verbunden. Zu diesem Zweck weisen die Leiterlaschen 24 an ihren inneren Enden Gewindelöcher auf, in welche die Kontaktschrauben 10 eingeschraubt werden, um die Schraubkontakte der Streifensicherungen 13 festzuklemmen. Entsprechende Gewindelöcher für entsprechende Kontaktschrauben 10 sind entlang des linken gewölbten Randes der Sammelschiene 22 vorgesehen. Am außenliegenden Ende der Leiterlaschen 24 sind Gewindelöcher vorgesehen, in welche die Kontaktbolzen 4 eingeschraubt sind. Jede Leiterlasche 24 ist elektrisch isoliert auf der Grundplatte 1 angeordnet. Insbesondere Fig. 4 zeigt, dass seitlich der Kontaktbolzens 4 zwei Rippen 35 aus isolierendem Material angeordnet sind, die einen unerwünschten Kontakt zwischen zwei benachbarten Kontaktbolzen 4 verhindern. Die Rippen 35 sind wie die Rippen 34 an die Dichtwandung 33 der Grundplatte 1 angeformt.

Die Leiterlaschen 25, 26 für die Streifensicherungen 14 mit hohem Bemessungsstrom unterscheiden sich von den Leiterlaschen 24 für die mittleren Streifensicherungen 13. Die erste Leiterlasche 25 hat wegen des größeren Stromflusses einen größeren Querschnitt als die Leiterlasche 24 und dient dem Anschluss eines Kabelschuhs. Sie weist zu diesem Zweck am außen liegenden Ende einen Kontaktbolzen 4 auf. Ein weiterer Kontaktbolzen 7 am radial innenliegenden Ende der Leiterlasche 25 dient dem Anschluss eines Sicherungskontakts. Der zweite Sicherungskontakt ist über einen Kontaktbolzen 7 mit der Sammelschiene 22 verschraubt.

Die zweite Leiterlasche 26 dient dem Anschluss zweier Kabelschuhe. Zu diesem Zweck weist sie zwei Kontaktbolzen 4 am radial außen liegenden Rand auf. Radial innen weist die Leiterlasche 26 einen Kontaktbolzen 7 für einen Kontakt der Streifensicherung 14 auf.

In der Fig. 5 sind ferner Platinen bzw. Leiterplatten 27, 28 dargestellt. Die Leiterplatte 27 auf der Vorderseite der Grundplatte 1 ist mit elektrischen Leiterbahnen versehen, welche Kontroll-LEDs 29 derart mit den Flachstecksicherungen 15 (Fig. 1) verschaltet, dass bei einem Ausfall einer Flachstecksicherung 15 die dieser Flachstecksicherung 15 zugeordnete LED 29 aufleuchtet. Genauer gesagt schaltet die Leiterplatte 27 jede der vier Kontroll-LEDs 29 parallel zu jeweils einer der vier Flachstecksicherungen 15. Werden die Flachstecksicherungen 15 unterbrochen, so werden die Kontroll-LEDs 29 mit Strom beaufschlagt und leuchten auf. Auf ähnliche Weise verschaltet die hinter der Grundplatte 1 angeordnete Leiterplatte 28 die Kontroll-LEDs 30 für die Streifensicherungen 13.

Die Fig. 3 zeigt die Innenseite des Deckels 2 mit dreizehn zapfenartigen Vorsprüngen 38 (Linien zu dem Bezugszeichen sind nur an acht der dreizehn Vorsprüngen angebracht). Der Deckel 2 besteht aus transparentem Kunststoff und die zapfenartigen Vorsprünge 38 sind ebenfalls transparent. Ihre freien Enden liegen bei verschlossenem Gehäuse des Verteilerkastens unmittelbar über jeweils einer LED 29, 30, so dass sich beim Aufleuchten einer LED in dem Bereich, in dem der zapfenartige Vorsprung 38 mit dem Deckel 2 verbunden ist, ein Leuchtfleck bildet. Es kann daher an der Außenseite des Deckels 2 eindeutig erkannt werden, welche Sicherung ausgefallen ist. Jeder zapfenartige Vorsprung 38 bildet folglich einen Lichtleiter, der das Lichtsignal der zugeordneten LED 29, 30 auf die Außenseite des Deckels 2 leitet.

Abdeckplatten 31 und 32 decken die Leiterplatten 27 und 28 ab und schützen diese vor unerwünschtem Kontakt mit anderen elektrischen Leitern. Auch die Abdeckplatten 31, 32 bestehen wie die Grundplatte 1, der Deckel 2 und der Drehknauf 3 aus elektrisch gut isolierendem und widerstandsfähigem Kunststoffmaterial. Die im Inneren des Gehäuses angeordnete Abdeckplatte 31 deckt ferner den inneren Bereich der Sammelschiene 22 sowie die Steckkontakte 46 (Fig. 5) für die Flachstecksicherungen 15 ab.

An jeden Kontaktbolzen 5 der Sammelschiene 20 und an jeden Kontaktbolzen 6 der Sammelschiene 21 kann ein Kabelschuh eines Massekabels mittels einer Mutter 9 befestigt werden. Durch die Anordnung der Kontaktbolzen 5 und 6 entlang zweier konzentrischer Kreislinien und den Versatz der radial äußeren Kontaktbolzen 5, 6 zu den inneren Kontaktbolzen 5, 6 in Umfangsrichtung können an die Sammelschienen 20 und 21 eine große Anzahl Massekabel angeschlossen werden. Auch an die benachbarten Kontaktbolzen 5, 6, an denen die Leiterbrücke 23 angeordnet ist, können Kontaktschuhe angeschlossen werden.

Eine entsprechend hohe Anzahl an Kontaktbolzen 4 für die Pluskontakte über die Sicherungen 13, 14 steht in der in Fig. 1 und 6 linken Hälfte des Gehäuserandes zur Verfügung. Zusätzlich sind die Paare von Kontaktklemmen 11, 12 für den Anschluss von Verbrauchern über Flachstecksicherungen 15 im oberen Bereich angeordnet.

Die Fig. 6 zeigt beispielhaft den Anschluss eines Verbrauchers 39 an das von links gesehen zweite Paar Kontaktklemmen 11, 12 und eines weiteren Verbrauchers 40 an einen Kontaktbolzen 5 für die Masseleitung und einen Kontaktbolzen 4 für die Plusleitung, der mit einer Streifensicherung 13 gekoppelt ist.

Ferner zeigt die Fig. 6 den Anschluss zweier Batterien 36, 37 über jeweils einen Kontaktbolzen 6 für die Batteriemasse und je einen Kontaktbolzen 4 für den Pluspol, der wiederum über eine Streifensicherung 13 abgesichert ist.

Da je nach Anwendungsfall nicht alle verfügbaren Kontaktvorrichtungen mit Anschlüssen belegt sind, weist der Deckel 2 im Bereich seines Umfangs Abdeckzungen 41 (Fig. 2 und 3) auf, die sich im Bereich des Randes des Deckels 2 von dessen Außenseite zur Grundplatte 1 hin erstrecken. Jede Abdeckzunge 41 liegt im Wesentlichen zwischen zwei benachbarten Rippen 35 der Grundplatte 1. Das von der Grundplatte entfernte Ende der Abdeckzungen 41 ist über eine linienförmige Sollbruchstelle 42 mit dem Deckel 2 verbunden. Im Bereich der Sollbruchstelle 42 ist die Materialstärke des Deckels 2 reduziert, so dass jede Abdeckzunge 41 leicht herausgebrochen werden kann, wenn ein Kabel an den hinter dem Deckel liegenden Kontaktbolzen 4 angeschlossen werden soll.

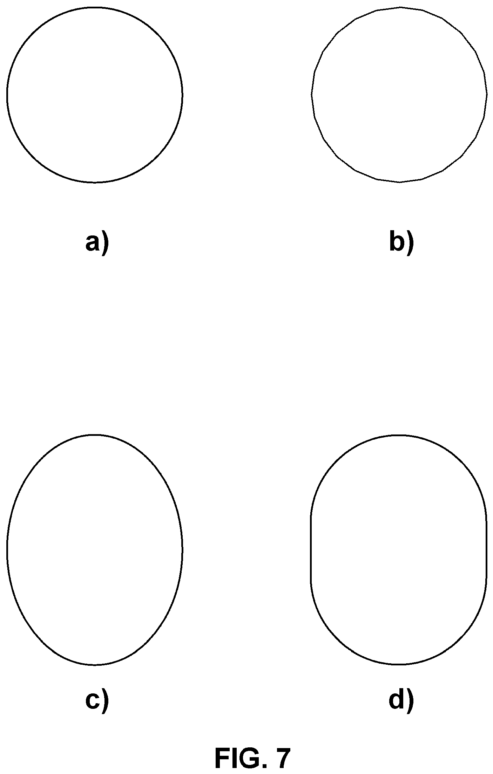

Die in den vorangehenden Figuren dargestellte Grundform des Gehäuses ist kreisrund. Diese Form hat sich in der Praxis sehr gut bewährt, um den sternförmigen Zulauf der Kabel zum Sicherungsverteiler zu ermöglichen. Die Grundform dieses Gehäuses ist in Fig. 7 in der Darstellung a) zu erkennen. Die Darstellung b) zeigt eine ebenfalls geeignete Grundform des Gehäuses, bei dem anstatt eines kreisrunden Verlaufs des Randes des Gehäuses ein Verlauf in vierundzwanzig geraden Abschnitten gewählt wurde, die jeweils einen Winkel von 15 ° zueinander aufweisen. Im Bereich jedes geraden Abschnitts des Randes kann ein Kontaktbolzen oder ein Paar von Kontaktbolzen angeordnet werden. Wenn in einer Richtung, z.B. der Hochrichtung, mehr Platz für das Gehäuse verfügbar ist als in der dazu senkrechten Richtung, kann das Gehäuse auch eine ovale Grundform aufweisen, wie sie beispielsweise in Darstellung c) der Fig. 7 gezeigt ist. Auch die ovale Grundform kann aus mehreren kurzen geraden Abschnitten bestehen. Alternativ kann die Grundform der Kontur des Gehäuses aus zwei einander gegenüberliegenden Halbkreisen bestehen, die auseinander gezogen und durch gerade Randabschnitte verbunden sind. Diese Grundform ist in Darstellung d) der Fig. 7 zu erkennen.

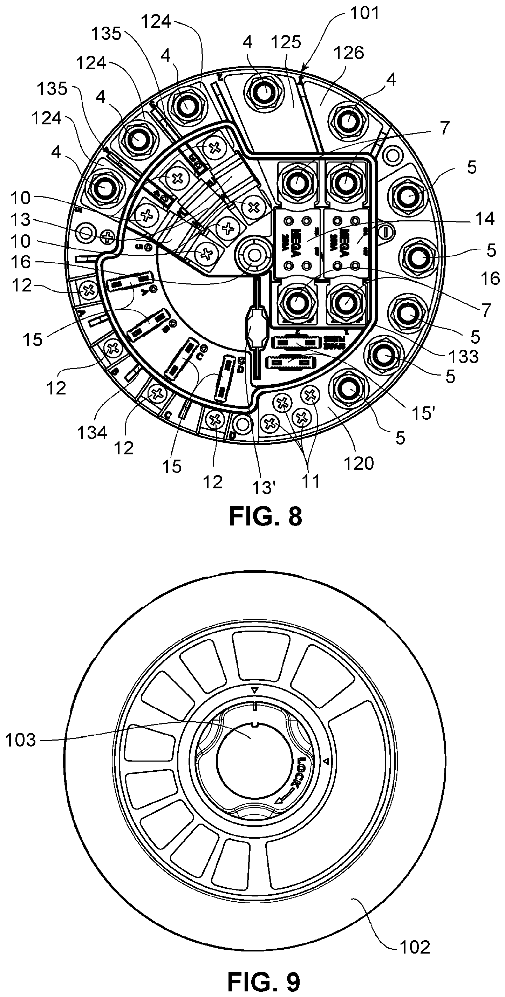

Die Fig. 8 bis 10 zeigen verschiedene Ansichten einer zweiten, kompakteren Ausführungsform eines Verteilerkastens der hier beschriebenen Art. Dabei sind zu den Bauteilen der ersten Ausführungsform der Fig. 1 bis 6 gleiche Bauteile mit gleichen Bezugszeichen versehen. Funktional entsprechende Bauteile mit abweichender Geometrie weisen den Bezugszeichen in den Fig. 1 - 5 entsprechende Bezugszahlen um den Wert 100 erhöht auf.

Die in Fig. 8 zu erkennende Grundplatte 101 der zweiten Ausführungsform des Verteilerkastens hat ebenfalls eine runde Grundform, allerdings mit erheblich reduziertem Durchmesser. Sie ist zur Aufnahme einer geringeren Zahl an Sicherungen bestimmt. Der in den Fig. 8 bis 10 dargestellte Verteilerkasten weist drei Streifensicherungen 13 für mittlere Bemessungsströme und zwei Streifensicherungen 14 für hohe Bemessungsströme auf. Zusätzlich weist er vier Flachstecksicherung 15 auf. Im mittleren Bereich der Grundplatte 101 Halterungen für eine Ersatzsicherung 13' einer Streifensicherungen für mittlere Bemessungsströme für zwei Ersatz-Flachstecksicherungen 15' vorgesehen.

Die runde Grundplatte 101 wird auch bei dieser Ausführungsform mit einem Deckel 102 (Fig. 9) abgedeckt, der durch einen Drehknauf 103 mit einem Widerlager 16 der Grundplatte 101 verbunden wird.

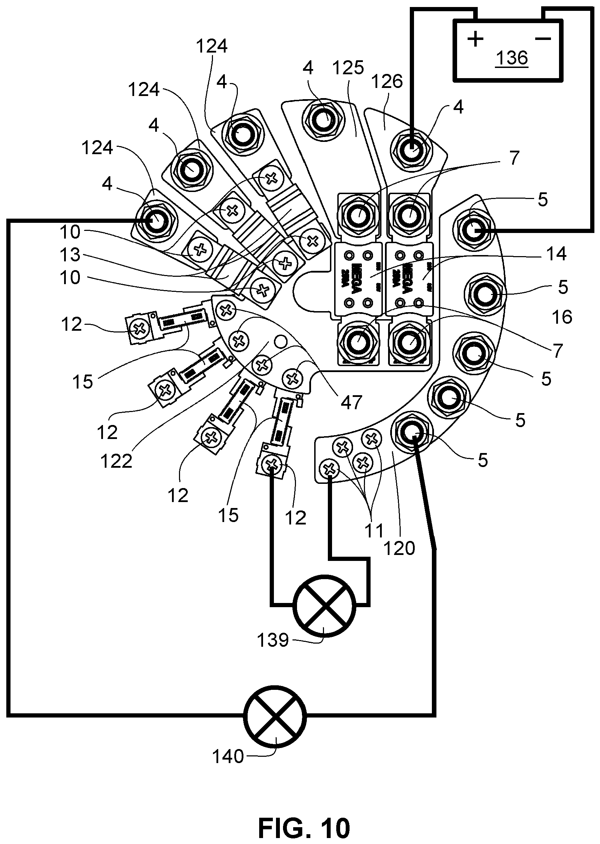

Die in Fig. 10 zu erkennende Anordnung der Sammelschienen und Leiterlaschen weicht bei der zweiten Ausführungsform gemäß den Fig. 8 bis 10 von derjenigen der ersten Ausführungsform ab. Sämtliche Sammelschienen und Leiterlaschen sind wie bei der ersten Ausführungsform innerhalb der Kontur der runden Grundplatte 101 (Fig. 8) aufgenommen. Eine Sammelschiene 120 für das Massepotential erstreckt sich in Fig. 10 im rechten unteren Viertel, welches dem untern rechten Quadranten der Grundplatte 101 (Fig. 8) entspricht. Anders als bei der vorangehenden Ausführungsform ist bei dieser Ausführungsform nur eine Sammelschiene 120 für Masseanschlüsse vorgesehen. Die vier Klemmschrauben, welche die Kontaktklemmen 11 für die Masseanschlüsse der über die Flachstecksicherungen 15 abgesicherten Verbraucher bilden, befinden sich bei dieser Ausführungsform gemeinsam am in Fig. 10 unteren Ende der Sammelschiene 120 für das Massepotential. Fünf Kontaktbolzen 5 für den Masseanschluss weiterer Stromquellen oder Verbraucher sind entlang des äußeren rechten Randes der Sammelschiene 120 angeordnet, der mit dem äußeren rechten Rand der Grundplatte 101 in Fig. 8 weitgehend übereinstimmt.

Eine Sammelschiene 122 für das Pluspotential hat eine C-förmige Grundform. Sie weist am rechten Ende des unteren Schenkels (Fig. 10) zwei Kontaktbolzen 7 für den Anschluss je einer Streifensicherung 14 für hohe Bemessungsströme auf. Am unteren Rand der Sammelschiene 122 sind vier Kontaktschrauben 47 eingeschraubt, mit denen die Stecksockel für die Flachstecksicherungen 15 festgeschraubt sind. Am äußeren Rand des oberen Schenkels der Sammelschiene 122 befinden sich Gewindelöcher für drei Kontaktschrauben 10, mit denen die Streifensicherung 13 für mittlere Bemessungsströme festgeschraubt sind.

Leiterlaschen 124, 125 und 126 zur Verbindung der innenliegenden Kontaktvorrichtungen 7 und 10, an denen die Streifensicherungen 14 und 13 befestigt sind, mit den äußeren Kontaktvorrichtungen entlang des gebogenen Randes der Grundplatte 101, nämlich den Kontaktbolzen 4, sind derart gestaltet, dass sie in die kreisförmige Grundform der Grundplatte 101 passen, ohne einander zu berühren. Auf diese Weise erhalten die Leiterlaschen trotz kleiner Bauform einen großen Querschnitt, der von Strom durchflossen wird. Im linken unteren Quadranten der Grundplatte 101 (Fig. 8) sind die Kontaktklemmen 12 unmittelbar mit den Sockeln für die Aufnahme der Streifensicherungen 12 verbunden.

Auf diese Weise wird mit dem Verteilerkasten der Fig. 8 - 10 auch für die reduzierte Zahl der Anschlüsse und Sicherungen eine optimale Form mit kompakter Geometrie erreicht. Die außen liegenden Kontaktvorrichtungen (Kontaktbolzen 4, 5 und Kontaktklemmen 12) sind in nahezu regelmäßigen Abständen voneinander entlang des gebogenen Gehäuserands auf der Grundplatte 101 angeordnet. Jeder ersten Kontaktvorrichtung 4, 5 und 12 ist eine zur Mitte des Gehäuses hin verlagerte zweite Kontaktvorrichtung 10, 7, 47 zugeordnet ist, so dass eine Sicherung 13, 14, 15 mit der ersten Kontaktvorrichtung 4 und der zugeordneten zweiten Kontaktvorrichtung 10, 7, 47 verbindbar ist.

Ähnlich wie die Fig. 6 der ersten Ausführungsform zeigt auch die Fig. 10 über den Verteilerkasten angeschlossene Verbraucher 139, 140 und eine an dem Verteilerkasten angeschlossene Batterie 136. Die Batterie 136 ist bei dieser Ausführungsform mit dem Pluspol über einen Kontaktbolzen 4 mit einer Streifensicherung 14 für hohe Bemessungsströme verbunden und durch diese abgesichert. Mit dem Minuspol ist die Batterie 136 an dem in Fig 10 obersten Kontaktbolzen 5 der Sammelschiene 120 für das Massepotential angeschlossen. Ein Verbraucher 140 ist mit dem untersten Kontaktbolzen 5 der Sammelschiene 120 für das Massepotential sowie über einen Kontaktbolzen 4 mi einer zweiten Streifensicherung 13 für mittlere Bemessungsströme verbunden. Ein zweiter Verbraucher 139 ist über eine Flachstecksicherung 13 abgesichert und durch eine Kontaktklemme 12 mit der Sammelschiene 122 für das Pluspotential verbunden. Eine zweite Kontaktklemme 11 verbindet diesen Verbraucher 139 mit einer Kontaktklemme 11 der Sammelschiene 120 für das Massepotential.

Wie bei der vorangehenden Ausführungsform sind auch bei dieser Ausführungsform die Masse-Sammelschiene 120 und die Leiterlaschen 124, 125, 126 teilweise in das Material der Grundplatte 101 eingebettet. Die Sammelschiene 122 mit Pluspotential ist vollständig von dem isolierenden Material der Grundplatte 101 abgedeckt. Des Weiteren sind auch bei dieser Ausführungsform Rippen 134 und 135 vorgesehen, welche nebeneinander liegende Kontaktvorrichtungen 4, 12 mit unterschiedlichen Potentialen isolieren. Auch bei dieser Ausführungsform ist der Aufnahmeraum für die Sicherungen 13, 14, 15 auf der Grundplatte 101 von einer aus dem Material der Grundplatte 101 herausragende Dichtwandung 133 umgeben, welche mit einer doppelwandigen Dichtwandung (nicht dargestellt) im Deckel 102 zusammenwirkt.

So wird auch mit dieser Ausführungsform der Fig. 8 - 10 eine sehr kompakte Bauform des Verteilerkastens erreicht, wobei die Anschlusskabel in radialer Richtung und sternförmig zum Gehäuse des Verteilerkastens geführt werden können.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1: Grundplatte
- 2: Deckel
- 3: Drehknauf
- 4: Kontaktbolzen
- 5: Kontaktbolzen
- 6: Kontaktbolzen
- 7: Kontaktbolzen
- 8: Verriegelungselement
- 9: Mutter
- 10: Kontaktschraube
- 11: Kontaktklemme
- 12: Kontaktklemme
- 13: Streifensicherung
- 13': Ersatzsicherung
- 14: Streifensicherung
- 14': Ersatzsicherung
- 15: Flachstecksicherung
- 15': Ersatzsicherung
- 16: Widerlager
- 17: Dichtring
- 18: Dichtung
- 19: Streifen
- 20: Sammelschiene
- 21: Sammelschiene
- 22: Sammelschiene
- 23: Leiterbrücke
- 24: Leiterlasche
- 25: Leiterlasche
- 26: Leiterlasche
- 27: Leiterplatte
- 28: Leiterplatte
- 29: LED
- 30: LED
- 31: Abdeckplatte
- 32: Abdeckplatte
- 33: Dichtwandung
- 34: Rippe
- 35: Rippe
- 36: Batterie
- 37: Batterie
- 38: zapfenartiger Vorsprung, Lichtleiter
- 39: Verbraucher
- 40: Verbraucher
- 41: Abdeckzunge
- 42: Sollbruchstelle
- 43: Isolationsstreifen
- 44: Dichtwandung
- 45: Aufnahmenut
- 46: Steckkontakt
- 47: Kontaktschraube

- 101: Grundplatte
- 102: Deckel
- 103: Drehknauf
- 120: Sammelschiene
- 122: Sammelschiene
- 124: Leiterlasche
- 125: Leiterlasche
- 126: Leiterlasche
- 133: Dichtwandung
- 136: Batterie
- 139: Verbraucher
- 140: Verbraucher

## Patentansprüche

1. Verteilerkasten für ein Fahrzeug, umfassend ein Gehäuse mit Kontaktvorrichtungen (4, 5, 6, 7, 10, 11, 12), die für den Anschluss der Massekabel und der Pluskabel mindestens einer Batterie (36, 37) und der elektrischen Verbraucher (39, 40) in dem Fahrzeug eingerichtet sind, wobei mehrere Sicherungen (13, 14, 15) mit Schraubkontakten oder Steckkontakten in dem Gehäuse anbringbar und elektrisch leitend mit den Kontaktvorrichtungen (4, 5, 6, 7, 10, 11, 12) verbindbar sind, **dadurch gekennzeichnet, dass** das Gehäuse in Draufsicht eine runde oder ovale Grundform aufweist, wobei der Gehäuserand gebogen ist oder eine polygonale Form mit kurzen geraden Randabschnitten aufweist oder aus aneinander angrenzenden gerundeten Randabschnitten besteht, und dass erste Kontaktvorrichtungen (4) in Abständen zueinander entlang des gebogenen oder polygonalen oder aus gerundeten Randabschnitten bestehenden Gehäuserands angeordnet sind, wobei jeder ersten Kontaktvorrichtung (4) eine zur Mitte des Gehäuses hin verlagerte zweite Kontaktvorrichtung (10) zugeordnet ist, so dass eine Sicherung (13) mittels eines Schraubkontakts oder Steckkontakts mit der ersten Kontaktvorrichtung (4) und mittels eines Schraubkontakts oder Steckkontakts mit der zugeordneten zweiten Kontaktvorrichtung (10) verbindbar ist.

2. Verteilerkasten nach Anspruch 1, **dadurch gekennzeichnet, dass** das Gehäuse eine ovale Grundform und der Gehäuserand einander gegenüberliegende gerade Abschnitte aufweist, in denen mehrere Kontaktvorrichtungen angeordnet sind.

3. Verteilerkasten nach Anspruch 1 oder 2, **dadurch gekennzeichnet, dass** er weiterhin mindestens eines der folgenden Bauelemente umfasst:
• elektrische Leiterbrücke (23);
• LED (29, 30).

4. Verteilerkasten nach einem der vorangehenden Ansprüche, **dadurch gekennzeichnet, dass** in dem Gehäuse mindestens eine Sammelschiene (20, 21, 22; 120, 122) angeordnet ist, deren äußerer Rand dem Gehäuserand folgt und die entlang ihres Randes in vorgegebenen Abständen mit Kontaktvorrichtungen (4, 5, 6) elektrisch leitend verbunden ist.

5. Verteilerkasten nach Anspruch 4, **dadurch gekennzeichnet, dass** die Sammelschiene (20, 21, 22) mindestens eines der folgenden Merkmale aufweist:
• eine erste Reihe von äquidistanten Kontaktvorrichtungen (5,6) ist außen liegend nahe dem äußeren Rand der Sammelschiene (20, 21) angeordnet;
• eine zweite Reihe von äquidistanten Kontaktvorrichtungen (5,6) ist innen liegend mit einem größeren Abstand zum äußeren Rand der Sammelschiene (20, 21) angeordnet;
• die außen liegenden und die innen liegenden Kontaktvorrichtungen (5,6) sind in Umfangsrichtung des gekrümmten Gehäuserandes zueinander versetzt sein.

6. Verteilerkasten nach Anspruch 4 oder 5, **gekennzeichnet durch** mindestens
• eine erste Sammelschiene (21), die dazu eingerichtet ist, mit mindestens einem Massekabel mindestens einer Batterie (36, 37) verbunden zu werden;
• eine zweite Sammelschiene (20), die dazu eingerichtet ist, mit mindestens einem Massekabel mindestens eines Verbrauchers (40) verbunden zu werden;
• eine elektrische Leiterbrücke (23), welche die erste Sammelschiene (21) und die zweite Sammelschiene (20) elektrisch leitend verbindet.

7. Verteilerkasten nach einem der vorangehenden Ansprüche, **dadurch gekennzeichnet, dass** die Kontaktvorrichtung mindestens eins der folgenden aufweist:
• Kontaktbolzen (4 - 7);
• Kontaktklemme (11, 12);
• Kontaktschraube (10).

8. Verteilerkasten nach einem der vorangehenden Ansprüche, **dadurch gekennzeichnet, dass** er mindestens eine Leiterplatte (27, 28) oder Leiterlasche (24 - 26; 124, 126) aufweist, welche in dem Gehäuse angeordnete Baulemente elektrisch leitend miteinander verbindet.

9. Verteilerkasten nach einem der Ansprüche 7 oder 8, **dadurch gekennzeichnet, dass** mindestens eine Sammelschiene (20 - 22; 120, 122), Leiterplatte (27, 28) oder Leiterlasche (24 - 26; 124, 126) mindestens eine Gewindebohrung aufweist, in die eine Schraube zur Bildung eines Kontaktbolzens (4 - 7) eingeschraubt ist.

10. Verteilerkasten nach einem der vorangehenden Ansprüche, **dadurch gekennzeichnet, dass** das Gehäuse mindestens eines der folgenden Merkmale aufweist:
• Das Gehäuse weist eine Grundplatte (1; 101) und einen abnehmbaren Deckel (2; 102) auf;
• eine Dichtung (18) ist zwischen der Grundplatte (1) und dem Deckel (2) des Gehäuses angeordnet und dichtet den Bereich der Grundplatte (1), auf dem die Sicherungen (13, 14, 15) anbringbar sind, gegenüber der Umgebung ab;
• der Deckel (2; 102) weist einen Drehverschluss auf, der mit einem Widerlager (16) der Grundplatte (1; 101) verriegelbar ist;
• der Deckel (2) weist mindestens einen Lichtleiter (38) auf, der sich in das Gehäuse erstreckt und dessen freies Ende nahe einer LED (29, 30) liegt;
• der Deckel (2) weist im Bereich des Gehäuserandes mindestens eine Abdeckzunge (41) für eine Kontaktvorrichtung (4) auf und die Abdeckzunge (41) ist über eine Sollbruchstelle (42) an dem Deckel befestigt;
• die Grundplatte (1) weist zwischen zueinander benachbarten Kontaktvorrichtungen (4, 12) nahe dem Gehäuserand Rippen (34, 35) aus isolierendem Material auf;
• die Grundplatte (1) weist eine Kopplungsvorrichtung auf, an der ein Isolationsstreifen (43) zwischen zwei Kontaktvorrichtungen (5,6) befestigbar ist;
• die Grundplatte (1) ist aus Kunststoff hergestellt, in den mindestens eine Sammelschiene (20, 21, 22; 120, 122), Leiterplatte (27, 28), Leiterlasche (24 - 26; 124, 126) oder Kontaktvorrichtung (4-6) eingebettet ist.

11. Verteilerkasten nach einem der vorangehenden Ansprüche, **dadurch gekennzeichnet, dass** er mindestens eine elektrisch isolierende Abdeckplatte (31, 32) aufweist.

## Claims

1. Distribution box for a vehicle comprising a housing with contact devices (4, 5, 6, 7, 10, 11, 12) configured for connecting the ground cables and positive cables of at least one battery and the electrical loads in the vehicle, wherein a plurality of fuses (13, 14, 15) having screw connectors or plug contacts is mountable in the housing and electroconductively connectable to the contact devices (4, 5, 6, 7, 10, 11, 12), **characterized in that** the housing has, in plan view, a round or oval basic shape, the housing periphery being curved or having a polygonal shape with short straight periphery sections or consisting of adjacent rounded periphery sections, and **in that** first contact devices (4) are arranged at intervals from one another along the housing periphery being curved or polygonal or consisting of adjacent rounded periphery sections, wherein each first contact device (4) is assigned a second contact device (10) which is displaced towards the center of the housing, so that a fuse (13) is connectable to the first contact device (4) using a screw connector or plug contact and to the assigned second contact device (10) using a screw connector or plug contact.

2. Distribution box according to claim 1, **characterized in that** the housing has an oval basic shape and the housing periphery has straight sections lying opposite one another, in which several contact devices are arranged.

3. Distribution box according to claim 1 or 2, **characterized in that** it further comprises at least one of the following components:
• electrical jumper (23);
• LED (29, 30).

4. Distribution box according to one of the preceding claims, **characterized in that** at least one busbar (20, 21, 22; 120, 122) is arranged in the housing, the outer periphery of the busbar following the periphery of the housing and the busbar being electroconductively connected to contact devices (4, 5, 6) at predetermined intervals along its periphery.

5. Distribution box according to claim 4, **characterized in that** the busbar (20, 21, 22) comprises at least one of the following features:
• a first row of equidistant contact devices (5, 6) is arranged in the outer region near the outer periphery of the busbar (20, 21);
• a second row of equidistant contact devices (5, 6) is arranged in the inner region at a greater distance from the outer periphery of the busbar (20, 21);
• the external and internal contact devices (5, 6) are offset from each other in the circumferential direction of the arched periphery of the housing.

6. Distribution box according to claim 4 or 5, **characterized by** at least
• a first busbar (21), which is configured to be connected to at least one ground cable of at least one battery (36, 37);
• a second busbar (20), which is configured to be connected to at least one ground cable of at least one load (40);
• an electrical jumper (23), that electroconductively connects the first busbar (21) and the second busbar (20).

7. Distribution box according to one of the preceding claims, **characterized in that** the contact device comprises at least one of the following:
• contact bolt (4 - 7);
• contact terminal (11, 12);
• contact screw (10).

8. Distribution box according to one of the preceding claims, **characterized in that** it comprises at least one printed circuit board (27, 28) or conductor tab (24 - 26; 124, 126) which electroconductively connects components arranged in the housing to one another.

9. Distribution box according to one of claims 7 or 8, **characterized in that** at least one busbar (20 - 22; 120, 122), printed circuit board (27, 28) or conductor tab (24 - 26; 124, 126) has at least one threaded hole into which a screw is screwed for forming a contact bolt (4 - 7).

10. Distribution box according to one of the preceding claims, **characterized in that** the housing has at least one of the following features:
• the housing has a base plate (1; 101) and a removable cover (2; 102);
• a seal (18) is arranged between the base plate (1) and the cover (2) of the housing and seals the area of the base plate (1) to which the fuses (13, 14, 15) are attachable from the environment;
• the cover (2; 102) has a twist lock that can be locked to a receptor (16) of the base plate (1; 101);
• the cover (2) has at least one light conductor (38) which extends into the housing and whose free end is located near an LED (29, 30);
• the cover (2) has at least one cover tab (41) for a contact device (4) in the area of the housing periphery and the cover tab (41) is attached to the cover via a predetermined breaking point (42);
• the base plate (1) has ribs (34, 35) made of insulating material between adjacent contact devices (4, 12) near the periphery of the housing;
• the base plate (1) has a coupling device to which an insulating strip (43) is attachable between two contact devices (5, 6);
• the base plate (1) is made of plastic, in which at least one busbar (20, 21, 22; 120, 122), printed circuit board (27, 28), conductor tab (24 - 26; 124, 126) or contact device (4-6) is embedded.

11. Distribution box according to one of the preceding claims, **characterized in that** it has at least one electrically insulating cover plate (31, 32).

## Revendications

1. Coffret de distribution pour un véhicule, comprenant un boîtier pourvu de dispositifs de contact (4, 5, 6, 7, 10, 11, 12) qui sont conçus pour le raccordement des câbles de masse et des câbles positifs d'au moins une batterie (36, 37) ainsi que des consommateurs électriques (39, 40) dans le véhicule, plusieurs fusibles (13, 14, 15) à contacts à vis ou à contacts à enfichage pouvant être montés dans le boîtier et pouvant être connectés de manière électriquement conductrice aux dispositifs de contact (4, 5, 6, 7, 10, 11, 12),
**caractérisé en ce que** le boîtier présente, vu de dessus, une forme de base ronde ou ovale, le bord du boîtier étant incurvé ou présentant une forme polygonale avec de courtes portions de bord rectilignes ou étant composé de portions de bord arrondies adjacentes les unes des autres, et **en ce que** des premiers dispositifs de contact (4) sont disposés à distance les uns des autres le long du bord du boîtier incurvé ou polygonal ou composé de portions de bord arrondies, un deuxième dispositif de contact (10), qui est décalé vers le centre du boîtier, étant associé à chaque premier dispositif de contact (4), de sorte qu'un fusible (13) peut être relié au premier dispositif de contact (4) au moyen d'un contact à vis ou d'un contact à enfichage et au deuxième dispositif de contact (10) associé au moyen d'un contact à vis ou d'un contact à enfichage.

2. Coffret de distribution selon la revendication 1, **caractérisé en ce que** le boîtier présente une forme de base ovale et le bord du boîtier présente des portions droites opposées les unes aux autres, dans lesquelles sont disposés plusieurs dispositifs de contact.

3. Coffret de distribution selon la revendication 1 ou 2, **caractérisé en ce qu'**il comprend en outre au moins l'un des composants suivants :
• pont conducteur électrique (23) ;
• LED (29, 30).

4. Coffret de distribution selon l'une des revendications précédentes, **caractérisé en ce qu'** au moins une barre collectrice (20, 21, 22 ; 120, 122) est disposée dans le boîtier, dont le bord extérieur suit le bord du boîtier et qui est reliée de manière électriquement conductrice à des dispositifs de contact (4, 5, 6) le long de son bord à des intervalles prédéfinis.

5. Coffret de distribution selon la revendication 4, **caractérisé en ce que** la barre collectrice (20, 21, 22) présente au moins l'une des caractéristiques suivantes :
• une première rangée de dispositifs de contact (5, 6) équidistants est disposée à l'extérieur près du bord extérieur de la barre collectrice (20, 21) ;
• une deuxième rangée de dispositifs de contact (5, 6) équidistants est disposée à l'intérieur à une plus grande distance du bord extérieur de la barre collectrice (20, 21) ;
• les dispositifs de contact (5, 6) extérieurs et intérieurs sont décalés les uns par rapport aux autres dans la direction circonférentielle du bord de boîtier incurvé.

6. Coffret de distribution selon la revendication 4 ou 5, **caractérisé par** au moins
• une première barre collectrice (21), qui est conçue pour être connectée à au moins un câble de masse d'au moins une batterie (36, 37) ;
• une deuxième barre collectrice (20), qui est conçue pour être connectée à au moins un câble de masse d'au moins un consommateur (40) ;
• un pont conducteur électrique (23), lequel relie de manière électriquement conductrice la première barre collectrice (21) et la deuxième barre collectrice (20).

7. Coffret de distribution selon l'une des revendications précédentes, **caractérisé en ce que** le dispositif de contact possède au moins l'un des éléments suivants :
• boulon de contact (4 - 7) ;
• borne de contact (11, 12) ;
• vis de contact (10).

8. Coffret de distribution selon l'une des revendications précédentes, **caractérisé en ce qu'**il possède au moins une carte à circuit imprimé (27, 28) ou une languette conductrice (24 - 26 ; 124, 126), laquelle relie entre eux de manière électriquement conductrice des composants disposés dans le boîtier.

9. Coffret de distribution selon l'une des revendications 7 ou 8, **caractérisé en ce qu'**au moins une barre collectrice (20 - 22 ; 120, 122), une carte à circuit imprimé (27, 28) ou une languette conductrice (24 - 26 ; 124, 126) présente au moins un trou taraudé dans lequel est vissée une vis en vue de former un boulon de contact (4 - 7).

10. Coffret de distribution selon l'une des revendications précédentes, **caractérisé en ce que** le boîtier présente au moins l'une des caractéristiques suivantes :
• le boîtier possède une plaque de base (1 ; 101) et un couvercle amovible (2 ; 102) ;
• une garniture d'étanchéité (18) est disposée entre la plaque de base (1) et le couvercle (2) et rend étanche, par rapport à l'environnement, la zone de la plaque de base (1) sur laquelle peuvent être montés les fusibles (13, 14, 15) ;
• le couvercle (2 ; 102) possède une fermeture rotative qui peut être verrouillée avec une butée (16) de la plaque de base (1 ; 101) ;
• le couvercle (2) possède au moins un guide de lumière (38) qui s'étend dans le boîtier et dont l'extrémité libre se trouve à proximité d'une LED (29, 30) ;
• le couvercle (2) possède, dans la zone du bord du boîtier, au moins une languette de recouvrement (41) pour un dispositif de contact (4), et la languette de recouvrement (41) est fixée au couvercle par l'intermédiaire d'un point destiné à la rupture (42) ;
• la plaque de base (1) possède des nervures (34, 35) en matériau isolant entre des dispositifs de contact (4, 12) mutuellement adjacents près du bord du boîtier ;
• la plaque de base (1) possède un dispositif de couplage auquel une bande isolante (43) peut être fixée entre deux dispositifs de contact (5, 6) ;
• la plaque de base (1) est fabriquée en matière plastique, dans laquelle est incorporé(e) au moins une barre collectrice (20, 21, 22 ; 120, 122), une carte à circuit imprimé (27, 28), une languette conductrice (24 - 26 ; 124, 126) ou un dispositif de contact (4-6).

11. Coffret de distribution selon l'une des revendications précédentes, **caractérisé en ce qu'**il possède au moins une plaque de recouvrement (31, 32) électriquement isolante.
